# EUROPEAN PATENT APPLICATION

(11) **EP 2 189 927 A1**
(43) Date of publication of application: **26.05.2010**
(21) Application number: 09176638.6
(22) Date of filing: 20.11.2009
(51) Int. Cl.: G06K 9/32

(54) **Method and apparatus for taking images using portable terminal**

(30) Priority: 24.11.2008 KR 20080117033
(71) Applicant: SAMSUNG ELECTRONICS CO., LTD., Suwon-si, Gyeonggi-do (KR)
(72) Inventor: CHOI, Jin Young, Suwon-si Gyeonggi-do (KR)
(74) Representative: Harrison Goddard Foote

(57) **Abstract**

A portable terminal is capable of assisting a user to place a face of the user in a desired location in a captured image. A portion of a display area of the portable terminal is defined as a face area. A face of a subject outputted to the display area is recognized when a photography request signal is inputted through an input unit. The portable terminal can determine whether the recognized face of the subject is within the defined face area. A photographing operation is performed when the recognized face of the subject is within the defined face area. According to a method and an apparatus for photographing an image, a user may easily and quickly obtain an image of an object of which face is properly positioned in a user wanted location.

## Description

### TECHNICAL FIELD OF THE INVENTION

The present invention relates to a method and an apparatus for photographing an image using a portable terminal, and more particularly, to a method and an apparatus for photographing an image in which a face of a subject is placed properly in an area desired by a user.

### BACKGROUND OF THE INVENTION

Recently, terminals, for example, portable terminals, are able to perform diversified functions other than a call connection function due to increasing demand from customers. Specifically, terminals including a camera function are in widespread use. When photographing an image of a human object using such terminals with a camera function, a self photographing, that is, taking a self portrait, is frequently preferred by a user in accordance with growing popularity of user created contents (UCC), a personalized homepage, and the like. Meanwhile, in a conventional terminal where a display unit and a camera assembly are disposed on opposite sides of the terminal, there are some disadvantages in that the user cannot view the display unit and thus cannot view himself or herself on the display unit while photographing one's own image. In order to remedy this disadvantage, some terminals are designed such that a small convex mirror is positioned near the camera lens in consideration of a photographing angle so that the user can view his or her reflected image in the mirror. However, in such terminals, the user still has to repeatedly perform self photographing so as to obtain an image where his or her face is disposed on a desired area. Conversely, some terminals are designed such that the camera assembly is placed on the same side with the display unit so that the user can take a picture of a self image while viewing himself or herself. However, although such terminals are advantageous in that the user can view himself or herself while taking a self portrait, the user is usually required to stretch out a hand which holds the terminal long enough to get a good photographing angle. In such a case, an image may be out of a focus due to a shaking hand. In order to solve such problem, some terminals are equipped with a display unit or a camera that is characterized to be rotatable. However, in order to implement such terminals, there exist many limitations in mechanical as well as design aspects to overcome. Therefore, there is a need for a method in which quality self photographing is available without causing a burden to design or mechanical characteristics.

### SUMMARY OF THE INVENTION

To address the above-discussed deficiencies of the prior art, it is a primary object to provide a method and an apparatus for obtaining an image of an object wherein a face is placed properly in a desired area.

In accordance with an aspect of the present invention, a method of photographing an image using a portable terminal includes: defining a portion of a display area of the portable terminal as a face area; recognizing a face of a subject outputted to the display area when a photography request signal is inputted through an input unit; determining whether the recognized face of the subject is within the defined face area; and performing a photographing operation when the recognized face of the subject is within the defined face area.

In accordance with another aspect of the present invention, an apparatus for photographing an image in a portable terminal includes: a camera unit configured to receive an image of a subject and photograph the image of the subject when a photography request signal is inputted; a key input unit including a key through which a portion of a display area of the portable terminal is defined as a face area; a display unit configured to display the photographed image of the subject and the defined face area; and a controller configured to recognize the face of the subject when the photography request signal is inputted, configured to determine whether the recognized face of the subject is within the defined face area, and configured to perform a photographing operation when the recognized face of the subject is within the defined face area.

According to a method and an apparatus for photographing an image of the present invention, a user can easily and quickly obtain an image of an object wherein a face of the object is positioned properly in a user desired location without performing repetitive photography operations.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a block diagram of a schematic configuration of an image photographing apparatus according to an exemplary embodiment of the present invention;

FIGURE 2 illustrates a flowchart for an image photographing method according to an exemplary embodiment of the present invention;

FIGURES 3A and 3B illustrate screen interfaces of an image photographing apparatus according to an exemplary embodiment of the present invention; and

FIGURES 4A and 4B illustrate screen interfaces for explaining a setting of a recognition area according to an exemplary embodiment of the present invention.

### DETAILED DESCRIPTION OF THE INVENTION

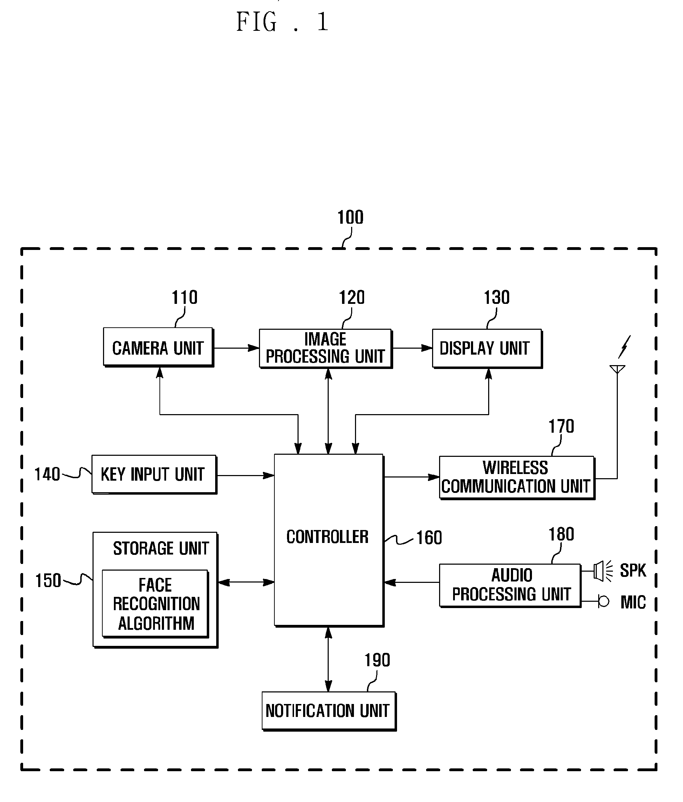

FIGURES 1 through 4B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged terminal.

The meaning of terms is clarified in this disclosure, so the claims should be read with careful attention to these clarifications. Terms do not necessarily have the same meaning here that they have in general usage, in the usage of a particular industry, or in a particular dictionary or set of dictionaries. In the event of an irresolvable conflict between a term's meaning as used expressly herein and the term's meaning as used in an incorporated document, the express meaning herein governs. For example, a 'self photographing' refers to a photographic technique that captures one's own image by using a photographing appliance. Also, a 'face area' refers to a portion of a display area where a face of a subject is disposed.

Also, it should be understood that the following disclosure is provided for exemplary purposes only and is not intended as a limitation of the present invention. Consequently, all alternate embodiments which are obvious modifications of this disclosure are intended to be encompassed within the scope of the present invention.

Also, a 'face recognition' function described in the following disclosure refers to a function to detect a face contour of the subject or extract a characteristic of a pupil thereof, and then extract characteristics of overall eye contour, eyebrow, nose, lips and the like, thereby recognizing the eye, nose, mouth, and the like of the subject. The 'face recognition' function can be performed by using methods disclosed in published papers or modification thereof such as R. A. Messner and H.H.Szu, "An image processing architecture for real time generation of scale and rotation invariant patterns" Computer Vision, Graphics and Image Processing, 31, pp. 50-66, 1985; K. Hotta T.Kurita, and T. Mishima, "Scale invariant face detection method using higher-order local autocorrelation features extracted from log-polar image" Proceedings of the 2nd International Conference on Automatic Face and Gesture Recognition, Nara, Japan, pp 70-75, Apr. 1998; T.S. Lee "Image Representation Using 2D Gabor Wavelets", IEEE Trans PAMI, Vol. 18, No. 10, Oct 1996; L. Wiskott, J. Marc, Fellous N. K. "Face Recognition by Elastic Bunch Graph Matching", IEEE Trans. PAMI, Vol. 19, No. 7, pp. 775-779, July 1997; or W.Y.Jeong and K.M.Lee "Rotation and Scale Invariant Face Detection Using Gabor Wavelet Filter and Log-polar Mapping" Computer vision and image Processing 13th KOREA. Jan. 2001.

Particularly, in order to extract characteristics of respective parts of the face of the subject, such as an eye, eyebrow, nose, mouth, and the like, methods disclosed in published papers or modification thereof can be used such as those in Nilanjan Rayand Scott T. Acton "Adaptive Image Processing via Snake Filters" Virginia Image and Video Analysis (VIVA), Department of Electrical and Computer Engineering, University of Virginia, Charlottesville, VA 22904.; L.Vincent, "Morphological area openings and closings for grey-scale images," In Shape in picture: Mathematical description of shape in grey level images, Y.-L.O, A. Toet, D. Foster, H. J. A. M. Heijmans, and P. Meer, editors, pp.197-208, NATO,1993.; F. Cheng and A.N. Venetsanopoulos, "An adaptive morphological filter for image processing," IEEE Transactions on Image Processing, vol.1, pp.533-539, 1992.; or P. Salembier and J. Serra," "Flat zones filtering, connected operators and filters by reconstruction," IEEE Transactions on Image Processing, vol.8, pp. 1153-1160, 1995.

FIGURE 1 illustrates a block diagram of a schematic configuration of an image photographing apparatus according to an exemplary embodiment of the present invention.

In the following description, it is assumed that the image photographing apparatus according to one example of the present invention configured as a portable terminal. However, the image photographing apparatus according the present invention is not limited to the portable terminal, but can apply to any apparatus that can perform an image photographing operation and recognize the face of the subject.

Therefore, it should be noted that the image photographing apparatus according the present invention can apply to all types of telecommunication devices, multimedia devices, and applications thereof such as a digital camera, a portable terminal having a camera assembly, a digital broadcast terminal, a personal digital assistant (PDA), a smart phone, an international mobile telecommunication 2000 (IMT-2000) terminal, a wideband code division multiple access (WCDMA) terminal, and a universal mobile telecommunication service (UMTS) terminal, and the like, in which recognition of the face of the subject can be performed.

Referring to FIGURE 1, an image photographing apparatus 100 according to an exemplary embodiment of the present invention can include a camera unit 110, an image processing unit 120, a display unit 130, a key input unit 140, a storage unit 150, a controller 160, a wireless communication unit 170, an audio processing unit 180 and a notification unit 190.

The camera unit 110 converts a light received through a camera lens into a digital data. The camera unit 110 can include a camera sensor that converts an input light signal into an electronic signal, and a signal processing unit that converts an analog image signal photographed by the camera sensor into a digital data. The camera sensor can be a charge-coupled device (CCD) or a complementary metal-oxide semiconductor (CMOS) sensor. The signal processing unit can be implemented with a digital signal processor (DSP). The camera sensor and the signal processing unit can either be separate entities or can be implemented in one entity. Additionally, the digital data photographed by the camera unit 110 can be stored temporarily or semi-permanently depending on a user's choice.

The processing unit 120 transmits, to the controller 160, an image data produced by processing an image signal outputted from the camera unit 110 on a frame unit basis. The transmitted image data can be adjusted according to a display characteristic and a screen size of the display unit 130 to be displayed on a screen for preview. A preview display function is a function to display an image of the subject received through the lens prior to performing an image photographing operation by the camera unit 110. Also, the image processing unit 120 can compress an image data and transmits the compressed image data to the controller 160. To this end, the image processing unit 120 can include an image codec and can perform a function to compress the image data displayed on the display unit 130 with a predefined method or restore the compressed image data to an original image data. For the image codec, a JPEG codec, an MPEG codec or a Wavelet codec can be used. Also, the image processing unit 120 may not be implemented with a separate unit but can be included in the controller 160. In this example, the function of the image processing unit 120 can be performed by the controller 160.

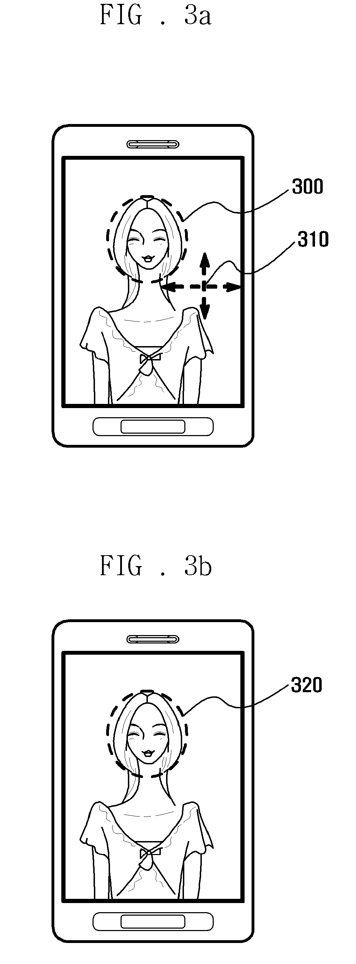

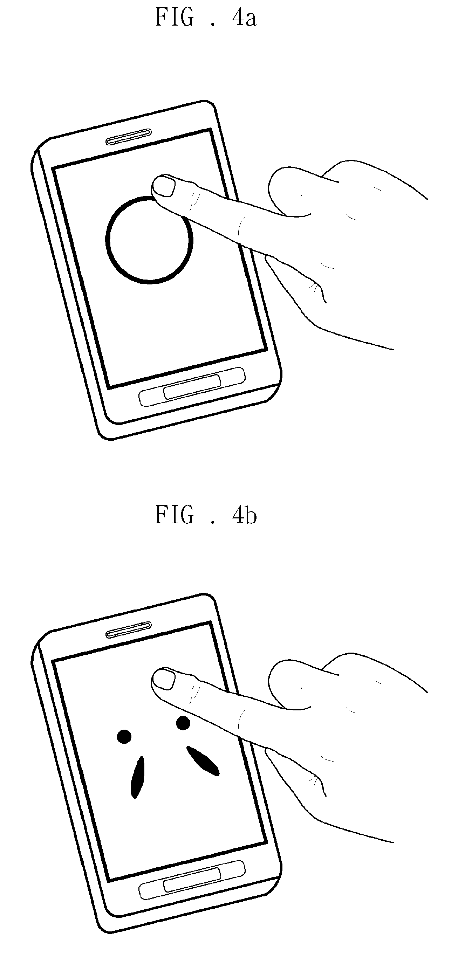

The display unit 130 displays information including various types of menus of the image photographing apparatus 100, information inputted by a user, or information to be provided to the user. Particularly, the display unit 130 can display an image photographed by the camera unit 110 or an image received externally by the wireless communication unit 170. Also, the display unit 130 can display an image photographed by the camera unit 110 before storing the image, and display a confirmation message of the storage or deletion of the image by the user. Particularly, in an exemplary embodiment of the present invention, the display unit 130 includes a certain area for displaying a photographed image. The display unit 130 can set, as a face area (i.e., an area that corresponds to a certain location or a certain size of an area where the user wants to displace the face of the subject), a portion of a display area thereof according to a user's request. The location or the size of the face area can be modified by the user. A screen interface of the display unit 130 according to a user operation will be described in detail later with FIGURES 3A, 3B, 4A and 4B.

The key input unit 140 includes a plurality of input keys and function keys to receive numeral or character information and perform various kinds of functions assigned thereto. The function keys can include an arrow key, a side key and a shortcut key that are assigned to perform specific functions. Also, the key input unit 140 transmits to the controller 160 an input key signal associated with a user setting and a function control of the image photographing apparatus 100.

Particularly, the key input unit 140 according to an exemplary embodiment of the present invention includes various kinds of keys for controlling an image photographing operation and generates a key input signal for each of the keys. For example, the key input unit 140 can include a camera shutter key for photographing an image by the user, a zoom-in/zoom-out function key for performing zoom-in or zoom-out prior to photographing an image, an arrow key for moving a menu, or a photographed image, of the image photographing apparatus 100, and other function key, or the like. The key input unit 140 generates and transmits a key input signal to the controller 160. The shutter key can provide a half shutter function. The half shutter function corresponds to an auto focusing function with respect to the subject when photographing. That is, in the half shutter function, a shutter can be depressed with stages of depression. A focus on the subject is controlled automatically in a depression stage including a certain depth, while a photographing is performed in the full depression. Particularly, in the exemplary embodiment of the present invention, a key input signal is produced by a user through the key input unit 140 to define a portion of the display area of the display unit 130 as the face area (i.e., an area where the face of the subject is to be placed having a user desired location or a user wanted size). The produced key input signal is provided to the controller 160. Additionally, the key input unit 140 generates a key input signal for modifying the location or the size of the face area and transmits the generated key input signal to the controller 160. In this example, the location of the face area can be changed by using an arrow key formed on the key input unit 140 and the size of the face area can be changed by using a zoom-in or zoom-out function key of the key input unit 140. Also, when the display unit 130 is implemented with a touch screen type, partial or entire function of the key input unit 140 can be performed through a touch input of the touch screen. Particularly, the key input unit 140 can be arranged such that at least one of the location and the size of the face area is changed by a touch operation on the touch screen, and the shape of the face area can also be changed into any other shape depending on a user's choice through a touch operation on the touch screen.

The storage unit 150 can store application programs needed to perform operations according to exemplary embodiments of the present invention, and can store, temporarily or semi-permanently, an image from an image photographing operation. The storage unit 150 can include a buffering function for temporarily storing a photographed image before storing and/or deleting the image. Also, the storage unit 150 can include a function to temporarily store consecutive photos taken in a picture photographing mode where a specific image is selected from among a plurality of consecutive images. The storage unit 150 can include a program area and a data area.

The program area can store an operating system for booting the image photographing apparatus 100, a face recognition algorithm for recognizing the face of the subject projected on to the camera unit 110, and the like. Also, the program area stores application programs needed to carry out additional options provided by the image photographing apparatus 100 such as a camera function, a sound reproducing function, an image or video reproducing function, and the like. Also, in an embodiment where the image photographing apparatus 100 includes a function of a portable terminal, the program area stores application programs needed to perform a voice phone call or a video telephony. The image photographing apparatus 100 can perform each function by using a corresponding application program under the control of the controller 160 when such function is activated in response to a user request.

The face recognition algorithm is an algorithm that can recognize the face of the subject. By using the face recognition algorithm, the contour of the face or a characteristic of a pupil is detected. Then, characteristics of an overall eye contour, eyebrow, nose, mouth and the like is extracted, thereby enabling the recognition of the eye, nose, mouth, and the like of the subject. A method for recognizing the face of the subject has already been discussed herein above, which recognizes the face contour and respective parts of the face such as eyes, nose, mouth and the like. Particularly, conventional techniques disclosed in published papers or modification thereof can be used to detect respective characteristics of each part of the face such as an eye, nose, eyebrow, nose, mouth and the like.

The data area stores a data produced by a photographing operation of the image photographing apparatus 100. In other words, the data area stores an image selected by a user from images photographed by the camera unit 110. Also, in an embodiment where the image photographing apparatus 100 includes a function as a portable terminal, the data area stores a phone book data, an audio data, and various kinds of user data. Further, the data area can temporarily store data that is produced during an operation of a program. The data area can be extended by using an external memory that is attachable/removable to/from the image photographing apparatus 100.

The controller 160 controls an overall operation of the image photographing apparatus 100 and a signal flow between internal blocks of the image photographing apparatus 100. The controller 160 can include a modem for supporting a communication function, and a codec feature for compressing an image when capturing the image or the like.

Particularly, the controller 160 controls the camera unit 110 based on various input signals by a user received through the key input unit 140. More particularly, when the user selects a self photographing mode (in embodiments wherein the image photographing apparatus of the present invention includes a mode for the user to take a self portrait), the controller 160 can control the image photographing apparatus 100 such that the self photographing mode can be entered. In the self photographing mode, the controller 160 controls such that the face area defined as described above is displayed on the display unit 130 according to an input of a face area defining signal received through the key input unit 140. Here, when a photography request signal is inputted by the user through, for example, the shutter key disposed on the key input unit 140, the face area of the subject inputted through the camera unit 110 is recognized as the face of the subject by using the face recognition algorithm included in the program area of the storage unit 150. Then, the controller 160 determines whether the recognized face of the subject is placed within the defined face area. When the recognized face of the subject is placed within the defined face area, the controller 160 controls the camera unit 110 to perform photographing. Alternatively, as a result of the determination, when it is determined that the recognized face of the subject is not placed within the defined face area, the controller 160 can determine the direction in which the subject or the image photographing apparatus 100 should move in order to place the face of the subject within the defined face area and can control the audio processing unit 180 or the notification unit 190 such that the user is notified of the direction and moves the subject or the image photographing apparatus 100 in the direction. In the above, it is described that respective operations of the image photographing apparatus 100 are performed in response to the photography request signal inputted from the user through, for example, the shutter key disposed on the key input unit. However, it should be noted that the respective operations can also be arranged to be performed in response to an auto focusing signal input by using the half shutter function of the shutter key.

The wireless communication unit 170 can be configured in the image photographing apparatus 100 when the image photographing apparatus 100 has a communication function as a portable terminal. The wireless communication unit 170 supports various functions such as a common voice phone call, a video telephony, and a data communication. To this end, the wireless communication unit 110 can include a wireless frequency transmission unit for up-converting and amplifying a frequency of a signal to be transmitted, and a wireless frequency reception unit for performing low noise amplification on a received signal and down-converting the frequency thereof. Particularly, the wireless communication unit 170 can form a communication channel under the control of the controller 160 such that the image photographed by the camera unit 110 can be transmitted to another terminal or a server.

The audio processing unit 180 plays an audio signal received from the wireless communication unit 170 through a speaker SPK, or collects an audio signal inputted through a mike MIC and transmits the collected audio signal to the controller 160. Particularly, the audio processing unit 180 can output a notification sound through the speaker SPK in order to notify the user of various operational statuses of the image photographing apparatus 100. Also, the audio processing unit 180 can output a stored voice announcement message or a stored notification sound in order to notify a user that the recognized face of the subject is placed within the defined face area and a photographing operation is in a ready state. Alternatively, when the recognized face of the subject is not placed within the defined face area, the audio processing unit 180 can output the stored voice announcement message or the notification sound in order to notify the user such that the user can move the subject or the image photographing apparatus 100 in a direction determined by the controller 160 in which the recognized face of the subject can be placed within the defined face area.

The notification unit 190 is a means for notifying the user of various operational statuses of the image photographing apparatus 100. The notification unit 190 can notify the user by using a lamp, vibration, a sound or the like. The notification means, such as, for example, a lamp, vibration, a sound or the like, can be set by a user. For example, when the self photographing mode is in operation and the face of the subject, inputted through the camera unit 110, is recognized and is determined to be within the face area defined by the user, the notification unit 190 can be operated under the control of the controller 160 in order to notify the user that a photographing operation is in a ready state. Alternatively, when the face of the subject is not within the defined face area, a preset notification means can be operated under the control of the controller 160 in order to notify the user that the subject or the image photographing apparatus 100 needs to be moved in a certain direction determined by the controller 160. To this end, the notification unit 190 can use a blinking lamp, a certain color of the lamp, a change in intensity, length, or pattern of vibration, in order to show such indication. Alternatively, by using the audio processing unit 180, the current status can be notified by outputting the voice announcement message or the notification sound that is predefined and stored. Also, when the audio processing unit 180 is incorporated into the notification unit 190, the audio processing unit 180 may not be implemented in a separate entity.

In the above, the configuration of the image photographing apparatus according to an exemplary embodiment of the present invention is described. Below is described a method of photographing an image according to an exemplary embodiment of the present invention using the above described configuration, with reference to the accompanying drawings, in which a portion of the display area is defined as the face area by the user, the face of the subject is recognized to determine whether the face of the subject is within the defined face area, and a photographing operation is performed if the face of the subject is within the defined face area.

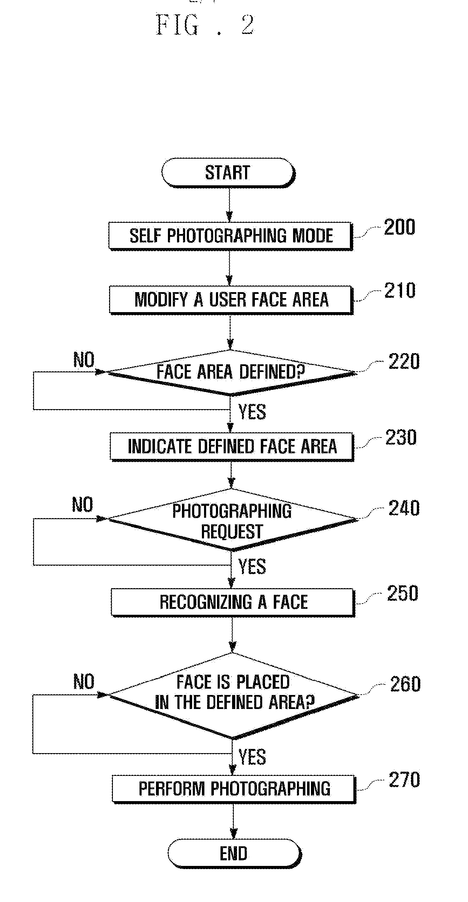

FIGURE 2 illustrates a flowchart of an image photographing method according to an exemplary embodiment of the present invention. FIGURES 3A, 3B, 4A and 4B illustrate screen interfaces according to exemplary embodiments of the present invention.

Hereinafter, with reference to FIGURE 1 and FIGURES 3A through 4B, a method of photographing an image according to an exemplary embodiment of the present invention is described.

When the self photographing mode is selected by the user, the controller 160 controls in such a manner that the self photographing mode is entered and the predefined face area 300 is indicated in a dotted line as shown in FIGURE 3a (block 200). In FIGURE 3a, the face area 300 is in an oval shape, however, it should be noted that the shape of the face area 300 can be modified to any other shape, for example, a polygon. With the face area 300 being represented, the controller 160 controls to display the predefined face area 300 of which location or size is modified according to an input signal from the key input unit 140 on the display unit 130 (block 210). Here, when an arrow key 310 is inputted, the face area 300 can be arranged to move in the direction of the arrow key 310 being entered, i.e., either in the horizontal or vertical direction or to the left or right, as shown in FIGURE 3a. Also, when the zoom-in or zoom-out function key is entered, the size of the face area 300 can be scaled accordingly. Then, the controller 160 determines whether a signal for defining the face area is inputted by the user (block 220). If the signal for defining the face area is inputted, the controller 160 displays the defined face area 320 on the display unit 130 (block 230).

With the face area being defined by user through performing blocks 200 to 230, the controller 160 determines whether a photography request signal is inputted by the user through the shutter key disposed on the key input unit 140 (block 240). When the photography request signal is inputted, the controller 160 controls in such a manner that the face of the subject inputted through the camera unit 110 is recognized by using the face recognition algorithm (block 250). When the recognition of the face of the subject is completed, the controller 160 determines whether the face of the subject is placed within the defined face area 320 (block 260). When the face of the subject is placed within the defined face area 320, as shown in FIGURE 3b, the controller 160 controls the camera unit 110 to perform photography (block 270). In this case, the photography can be set to be performed automatically after a certain period of stand-by time elapses.

In the process of face recognition at block 250, conventional techniques disclosed in published papers or modification thereof can be used to detect characteristics of respective parts of the face such as eyes, nose, eyebrow, nose, mouth and the like, as mentioned in the description of the exemplary embodiment of FIGURE 1. That is, a method of detecting the facial contour of the subject to recognize the face of the subject or a method of extracting the characteristics of respective parts of the face of the subject such as eyes, a nose, a mouth, etc., to recognize the face can be employed. These methods can be used individually or in combination thereof.

Here, when the method of detecting and recognizing the face contour is used, it is preferable that photographing is performed when the contour of the face is entered into the predefined face area. Also, when the method of detecting the characteristics of respective parts of the face is used, the face area at blocks 200 to 210 can include at least one sub area corresponding to an eye, nose or mouth of the subject. Here, at block 260, the controller 160 may recognize respective elements of the face of the subject, determines whether the recognized element of the face is entered into the defined sub area, and, if the recognized element of the face is entered into the defined sub area, controls the camera unit 110 to perform photographing at block 270. In other words, when the defined sub area is an area corresponding to an eye, the controller 160 determines whether the eye among the respective elements of the recognized face of the subject is entered into the defined sub area that corresponds to the eye, and if the recognized eye is entered into the defined sub area that corresponds to the eye, the controller 160 controls the camera unit 110 such that photographing can be performed.

Also, at blocks 200 to 210, in a case where the display unit 130 is implemented with a touch screen, when the self photograph mode is selected, a predefined face area may not be displayed but, instead, any other part of the user's face can be inputted by the user's touch on the touch screen, as illustrated in FIGURE 4a. In addition, when the face area is defined as at least one sub area that corresponds to one of, for example, the eye, nose, mouth of the subject, the location or shape of the at least one sub area can be determined by the user according to a user input through the touch screen.

Although not shown in FIGURE 2, at block 260, when the recognized face of the subject is entered in the face area defined by the user, a stored voice announcement message or a stored notification sound or the like can be outputted in order to notify the user that a photographing operation is in a ready state. Alternatively, if the recognized face of the subject is not entered in the face area defined by a user, the stored voice announcement message or the stored notification sound or the like can be outputted in order to notify the user that the user can move the subject or the image photographing apparatus 100 in a direction determined by the controller 160 toward the face area. Also, other than using a sound such as the voice announcement message or the notification sound, a notification means such as a lamp or vibration can be used in order to notify the user. In this case, the controller 160 operates the notification unit 190 such that respective status can be represented by a blinking lamp, a certain color of the lamp, a change in the intensity or the length or the pattern of variation, or the like.

As described above, by using a method and an apparatus for photographing an image according to exemplary embodiments of the present invention, a user may quickly obtain an image of an object of which face is properly positioned in a user wanted location without performing repetitive photographing operations.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of photographing an image using a portable terminal(100), the method comprising:
defining(200) a portion of a display area(130) of the portable terminal(1 00) as a face area(300);
recognizing(250) a face of a subject outputted to the display area(130) when a photography request signal is inputted from an input unit(140);
determining(260) whether the recognized face of the subject is placed within the defined face area(320); and
performing(270) a photographing operation when the recognized face of the subject is placed within the defined face area.

2. The method of claim 1, wherein defining a portion of a display area comprises modifying at least one of a size or a location of the face area according to an input signal from the input unit.

3. The method of claim 1, wherein performing a photographing operation comprises at least one of:
waiting for a preset stand-by time for automatic photographing;
notifying a user that the photographing operation is in a ready state, while the recognized face of the subject is placed within the defined face area; and
notifying a user of a direction in which the subject or the portable terminal should move in order to place the recognized face of the subject within the defined face area, if the recognized face of the subject is not placed within the defined face area.

4. The method of claim 1, wherein recognizing a face of a subject is performed by detecting a face contour of the subject.

5. The method of claim 1, wherein the face area includes at least one sub area that corresponds to respective parts of the face of the subject.

6. The method of claim 5, wherein recognizing a face of a subject comprises recognizing the face by identifying at least one of respective parts of the face of the subject.

7. An apparatus for photographing an image in a portable terminal(100), the apparatus comprising:
a camera unit(110) configured to receive an image of a subject and photograph the image of the subject when a photography request signal is inputted;
a key input unit(140) including a key through which a portion of a display area of the portable terminal is defined as a face area;
a display unit(130) configured to display the photographed image of the subject and the defined face area; and
a controller(160) configured to recognize the face of the subject when the photography request signal is inputted, configured to determine whether the recognized face of the subject is within the defined face area, and configured to perform a photographing operation when the recognized face of the subject is within the defined face area.

8. The apparatus of claim 7, wherein the face area is modified of at least one of a size or a location according to an input signal from the key input unit.

9. The apparatus of claim 7, wherein the controller controls to automatically photograph after a preset stand-by time elapses.

10. The apparatus of claim 7, further comprising a notification unit configured to notify a user of various statuses of the portable terminal.

11. The apparatus of claim 10, wherein the controller controls to operate the notification unit such that the user is notified that the photographing operation is in a ready state, while the recognized face of the subject is within the defined face area.

12. The apparatus of claim 10, wherein the controller controls to operate the notification unit so that the user is notified of a direction in which the subject or the portable terminal should move in order to place the recognized face of the subject within the defined face area, if the recognized face of the subject is not placed within the defined face area.

13. The apparatus of claim 7, wherein, in case the display unit is a touch screen, the face area has any shape determined by a touch operation on the touch screen.

14. The apparatus of claim 7, wherein the controller detects a face contour of the subject to recognize the face of the subject.

15. The apparatus of claim 9, wherein the face area includes at least one sub area that corresponds to respective parts of the face of the subject, and the controller recognizes the face by identifying at least one of respective parts of the face of the subject, and performs the photographing operation when the identified at least one part of the face is placed within the sub area that respectively corresponds.
